# EUROPÄISCHE PATENTSCHRIFT

(11) **EP 1 384 390 B1**
(45) Veröffentlichungstag und Bekanntmachung des Hinweises auf die Patenterteilung: **24.06.2009**
(21) Anmeldenummer: 01999487.0
(22) Anmeldetag: 06.12.2001
(51) Int. Cl.: H05B 3/14

(54) **VERFAHREN UND VORRICHTUNG ZUR TEMPERATURREGELUNG EINER MIT EINEM PTC-HEIZELEMENT ARBEITENDEN ELEKTRISCHEN HEIZUNG**
METHOD AND DEVICE FOR CONTROLLING TEMPERATURE OF AN ELECTRIC HEATER THAT FUNCTIONS WITH A POSITIVE TEMPERATURE COEFFICIENT (PTC) HEATING ELEMENT
PROCEDE ET DISPOSITIF DE REGULATION DE LA TEMPERATURE D'UN RADIATEUR FONCTIONNANT AVEC UN ELEMENT CHAUFFANT PRESENTANT UN COEFFICIENT DE TEMPERATURE POSITIF

(30) Priorität: 09.12.2000 DE 10061458
(43) Veröffentlichungstag der Anmeldung: 28.01.2004
(73) Patentinhaber: Beru Aktiengesellschaft, 71363 Ludwigsburg (DE); Eichenauer Heizelemente GmbH & Co. KG, 76870 Kandel (DE)
(72) Erfinder: REILING, Norbert, 74399 Wahlheim (DE); UHL, Günter, 74921 Helmstadt-Bargen (DE); NECKEL, Klaus, 74343 Sachsenheim (DE); STARCK, Roland, 76756 Bellheim (DE); ERBACHER, Frank, D-82319 Starnberg (DE)
(74) Vertreter: Twelmeier Mommer & Partner
(86) Internationale Anmeldenummer: PCT/EP2001/014312
(87) Internationale Veröffentlichungsnummer: WO 2002/045985

(56) Entgegenhaltungen:
- EP-A- 0 288 085
- EP-A- 0 837 381
- EP-A- 0 901 311
- EP-A- 1 026 020
- EP-A- 1 157 869
- DE-A- 4 404 345
- DE-A- 19 706 199
- DE-A- 19 833 201
- DE-A- 19 848 169
- DE-C- 19 728 589
- US-A- 4 926 025
- US-A- 5 275 012
- US-A- 5 279 459
- US-A- 6 072 153
- US-A- 6 118 099
- PATENT ABSTRACTS OF JAPAN vol. 012, no. 494 (P-805), 23. Dezember 1988 (1988-12-23) & JP 63 204410 A (MITSUBISHI ELECTRIC CORP), 24. August 1988 (1988-08-24)

## Beschreibung

Die Erfindung betrifft ein Verfahren zum Stabilisieren einer Temperatur einer Kfz-Zusatzheizung mit den Merkmalen des Oberbegriffs des Patentanspruchs 1 sowie eine Schaltung dafür mit den Merkmalen des Oberbegriffs des Patentanspruches 9.

Kfz-Heizungen nutzen in der Regel die Verbrennungswärme des Motors. Insbesondere bei den kraftstoffsparenden Dieseldirekteinspritzmotoren tritt im Winter das Problem auf, daß diese Motoren nicht schnell genug warm werden, um die Frontscheibe schnell genug zu entfrosten und den Fahrzeuginnenraum auf eine angenehme Temperatur aufzuheizen. Aus diesem Grund werden derartige Kraftfahrzeuge mit einer Zusatzheizung, welche typischerweise eine Leistung von 250 Watt bis 2.000 Watt aufweist, ausgestattet. Hierbei stellt sich das Problem Materialien im Kfz-Innenraum, insbesondere in der Nähe der Heizelemente der Zusatzheizung, vor Schaden durch Überhitzung zu bewahren. Aus diesem Grund sind sogenannte PTC-Heizelemente (Positiver Temperatur-Koeffizient) für Kfz-Zusatzheizungen besonders geeignet.

Durch Verwendung von Materialien, deren Widerstand mit wachsender Temperatur stark zunimmt, sogenannte PTCs (Positiver Temperatur-Koeffizient), lassen sich nämlich Heizelemente aufbauen, die ihre Heizleistung bei Überschreiten einer gewissen Grenztemperatur selbsttätig über mehrere Größenordnungen zurückfahren und damit ihre maximale Temperatur begrenzen. Diese sogenannten intrinsisch sicheren Heizelemente haben den Vorteil einen zuverlässigen Schutz vor einer Überhitzung des Heizelementes zu bieten.

Ein typischer Vertreter einer Materialklasse, welche ausgeprägte PTC-Charakteristiken aufweist, ist Bariumtitanat, eine dotierte Halbleiterkeramik, deren Charakteristik bezüglich Temperaturabhängigkeit des Widerstandsanstieges durch gezielte Änderungen der Rezeptur in weiten Grenzen eingestellt werden kann. Der Übergang von einer quasi ohmschen Widerstandscharakteristik zum mit der Temperatur stark ansteigenden PTC-Ast wird im Allgemeinen gekennzeichnet durch die Sprungtemperatur Tₛ. Dieser Übergang zwischen beiden Bereichen ist nicht abrupt, sondern kontinuierlich, er erstreckt sich also über ein gewisses Temperaturintervall. Charakteristisch für das Widerstandsverhalten innerhalb dieses Temperaturintervalls ist, daß die Leistungsabgabe des PTC Heizelementes schon merklich herabgesetzt ist, die intrinsische Regelwirkung jedoch zur Ausbildung einer effektiven Schutzfunktion noch nicht ausreicht. Für viele Anwendungen ist dies nachteilig, da vielfach eine konstante Heizleistung bis zum Erreichen der Grenztemperatur erwünscht ist. Insbesondere bei Kfz-Zusatzheizungen ist dies der Fall, da man möglichst rasch die Frontscheibe von Eis befreien möchte. Für im Kfz-Innenraum verwendete Kunststoffe bietet die PTC-Eigenschaft des Heizelementes nur unzureichenden Schutz vor Schmelzen und thermischer Verformung. Hinzu kommt, daß mit steigender Temperaturbeständigkeit der Preis von Kunststoffen steigt. Diesem Nachteil kann durch den Einsatz eines Thermostaten, Bimetallschalters oder Temperaturfühlers in Verbindung mit einem zusätzlichen Leistungssteller, dessen Begrenzungstemperatur bei einer Temperatur unterhalb der Sprungtemperatur Tₛ eingestellt ist, begegnet werden. Die PTC-Eigenschaft des Heizelementes stellt dann eine zusätzliche Sicherheitsfunktion dar, die bei Versagen der externen Temperaturbegrenzung zum Einsatz kommt und größere Schäden, hervorgerufen zum Beispiel durch Entzünden von Umgebungsmaterialien, zuverlässig verhindert. Ein Beispiel einer solchen Heizvorrichtung, bei welcher die Temperatur eines PTC-Heizelementes unter Verwendung mehrerer Temperaturfühler geregelt wird, offenbart die DE 200 06 599 U1.

Nachteilig an dieser Lösung ist, daß ein Thermostat oder Temperaturfühler einen zusätzlichen Aufwand bedeutet, der die Fertigungs- und Wartungskosten einer Anlage erhöht. Insbesondere Zusatzheizungen von Kraftfahrzeugen weisen in der Regel 3 bis 4 Register auf, so daß eine entsprechende Zahl von Bimetallschalter oder Temperaturfühler benötigt wird, was einen Aufwand an Platz, Material und Kosten verursacht.

Aufgabe der Erfindung ist es, bekannte Verfahren zum Stabilisieren der Temperatur bei Heizungen mit PTC-Heizelementen derart weiterzubilden, daß kostengünstig erreicht werden kann, daß bis zum Erreichen einer Solltemperatur die volle Heizleistung vorliegt.

Erfindungsgemäß wird diese Aufgabe durch ein Verfahren mit den im Anspruch 1 angegebenen Merkmalen gelöst. Eine neue Schaltung zur Durchführung des Verfahrens ist Gegenstand von Anspruch 9.

Vorteilhafte Weiterbildungen des Verfahrens und der Vorrichtung sind Gegenstand der Unteransprüche.

Bei PTC-Materialien ist in einem weiten Temperaturbereich der elektrische Widerstand eine Funktion der Temperatur. Die Temperatur einer mit einem PTC-Heizelement arbeitenden elektrischen Heizung kann daher auf einen Sollwert dadurch stabilisiert werden, daß der Strom auf einen von dieser Solltemperatur und der Nennspannung bestimmten Sollwert durch Steuern der dem PTC-Heizelement im zeitlichen Mittel anliegenden Spannung geregelt werden.

Dies hat den Vorteil, daß ohne den Aufwand eines externen Temperatursensors die Temperatur des Heizelementes stabilisiert werden kann. Vorteilhaft kann so gewährleistet werden, daß bis zum Erreichen der Solltemperatur das Heizelement stets eine im wesentlichen konstante Leistung abgibt.

Besonders vorteilhaft ist das erfindungsgemäße Verfahren für einen Kfz-Innenraumheizer, da für diese Anwendung gefordert wird, daß die Solltemperatur möglichst schnell erreicht wird. Dies läßt sich aber nur erreichen, wenn bis zum Erreichen der Solltemperatur stets die volle Heizleistung abgegeben wird. Für Kfz-Innenraumheizer bietet das Verfahren den weiteren Vorteil, daß preisgünstigere Kunststoffe mit einem niedrigeren Schmelzpunkt im Kfz-Innenraum verwendet werden können, da durch das Verfahren eine Erwärmung des PTC-Heizelementes auf die für das Schmelzen der Kunststoffe kritische Temperatur verhindert wird. Die PTC-Eigenschaft der Heizelemente bietet dann einen zusätzlichen Schutz vor einem Entzünden der Kunststoffe. Vorteilhaft können außerdem PTC-Materialien mit einer höheren Sprungtemperatur verwendet werden, welche eine größere Leistungsabgabe auf engerem Raum erlauben und so kompaktere KfzInnenraumheizer ermöglichen.

Insbesondere erlaubt es das erfindungsgemäße Verfahren, eine nahezu beliebige Zahl von Registern vorzusehen ohne, daß sich Aufwand zum Stabilisieren der Temperatur nennenswert erhöht. Gerade bei einer größeren Zahl von Registern ist der Vorteil ohne Bimetallschalter oder Temperaturfühler auskommen zu können besonders gewichtig.

Vorzugsweise wird die Temperatur, bei welcher die Heizung stabilisiert wird, so gewählt, daß sie in der Nähe der Sprungtemperatur des PTC-Heizelementes liegt. Also in jenem Temperaturintervall gewählt, in welchem der Übergang von einer quasi ohmschen Widerstandscharakteristik hin zum PTC-Verhalten erfolgt, da in diesem Temperaturintervall aufgrund der bereits vorhandenen Widerstandserhöhung bei einer konstanten anliegenden Spannung die Leistungsabgabe des Heizelementes bereits merklich herabgesetzt wäre. Vorteilhaft wird so bis zum Erreichen der Solltemperatur eine im wesentlichen konstante Leistungsabgabe erreicht.

Vorzugsweise wird der Versorgungsstrom gemessen, indem man ihn durch einen MOSFET fließen läßt, welcher an einem seiner Ausgänge ein Signal zur Verfügung stellt, welches ein dem Maß für diesen Strom ist. Vorteilhaft kann so die Vorrichtung zum Messen des Versorgungsstromes kompakt ausgeführt werden und es tritt kein Leistungsverlust auf, wie er bei einer Strommessung mittels eines parallelen Widerstandes erfolgen würde.

Vorzugsweise wird die Leistungsabgabe des PTC-Heizelementes durch Pulsweitenmodulation geregelt, da dies vorteilhaft eine geringe Verlustleistungsaufnahme bedingt.

Vorzugsweise wird zum Steuern der im zeitlichen Mittel am PTC-Heizelement anliegenden Spannung der Strom mittels des MOSFETs geschaltet, also ein MOSFET zur Pulsweitenmodulation eingesetzt. Vorteilhaft können so kurze Schaltzeiten erreicht werden.

Vorzugsweise wird das vom MOSFET gelieferte Signal einem Mikrocontroller zugeführt, welcher es auswertet und ein Stellsignal erzeugt, welches einem Steuereingang des MOSFET zugeführt wird. Durch den Einsatz eines Mikrocontrollers kann die Schaltung vorteilhaft kompakt ausgeführt werden und der Stromsollwert an Änderungen der Versorgungsspannung angepaßt werden.

Vorzugsweise wird die Versorgungsspannung des PTC-Heizelementes mittels eines Analog-Digitalwandlers des Mikrocontrollers gemessen. Vorteilhaft kann so der elektrische Widerstand des PTC-Heizelementes präzise ermittelt werden.

Vorzugsweise wird die Kennlinie, welche den Zusammenhang zwischen Temperatur und Versorgungsstrom bei der vorgegebenen Spannung umgibt, im Mikrocontroller gespeichert. Vorteilhaft läßt sich so jederzeit die Temperatur des PTC-Heizelementes ermitteln und der Regelvorgang optimiert werden.

Eine Schaltung zum Stabilisieren der Temperatur einer elektrischen Heizung, insbesondere einer Kfz-Zusatzheizung, nach dem erfindungsgemäßen Verfahren weist ein PTC-Heizelement und ein Strommeßgerät zum Messen des durch das PTC-Heizelement fließenden Versorgungsstromes auf sowie wie eine Regeleinrichtung auf, welche den elektrischen Strom durch Steuern der am PTC-Heizelement im zeitlichen Mittel anliegenden Spannung auf einen festgelegten Sollwert regelt. Vorteilhaft kann bei einer solchen Schaltung auf Thermostate, Bimetallschalter, Temperaturfühler oder ähnliche Mittel zum Erfassen der Temperatur verzichtet werden.

Vorzugsweise ist das Strommeßgerät ein MOSFET. Dies hat den Vorteil, daß das Strommeßgerät platzsparend in die Schaltung integriert werden kann.

Vorzugsweise weist die Regeleinrichtung einen Mikrocontroller auf, der den elektrischen Strom mit seinem Sollwert vergleicht und ein Signal zum Steuern der im zeitlichen Mittel am PTC-Heizelement anliegenden Spannung erzeugt. Vorteilhaft kann so die Regeleinrichtung kompakt ausgeführt werden.

Vorzugsweise ist der MOSFET ein Schalter, welcher zum Steuern der elektrischen Leistung den Strom schaltet. Vorteilhaft werden so kurze Schaltzeiten erreicht.

Vorzugsweise ist der Mikrocontroller über eine Schnittstelle mit einem Datenbus verbunden, welcher mit einem zentralen Mikroprozessor und / oder weiteren Stromverbrauchern verbunden. Vorteilhaft kann so extern durch den zentralen Mikroprozessor auf die Regelung Einfluß genommen werden und / oder die Auslastung der Spannungsquelle optimiert werden.

Wird das erfindungsgemäße Verfahren zum Stabilisieren der Temperatur einer Kfz-Zusatzheizung verwendet, welche wenigstens ein PTC-Heizelement und ein Bauteil, in welchem ein thermoplastischer Kunststoff verarbeitet ist, aufweist, dann wird der Sollwert der Temperatur vorzugsweise so gewählt, daß er unterhalb der Schmelztemperatur des thermoplastischen Kunststoffes liegt, und die Temperatur, bei welcher sich die Temperatur des PTC-Heizelementes aufgrund der PTC-Eigenschaft bei vorgegebener Nennspannung von selbst stabilisiert, wird vorzugsweise so gewählt, daß sie unterhalb der Entzündungstemperatur der Kunststoffe liegt. Vorteilhaft können so preiswerte thermoplastische Kunststoffe mit einem niedrigen Schmelzpunkt verwendet werden, da das erfindungsgemäße Verfahren Schutz vor einer Beschädigung durch Schmelzen bietet. Vorteilhaft bietet die PTC-Eigenschaft einen Schutz vor einer Entzündung der Kunststoffe im Falle eines Versagens der Temperaturregelung.

Weitere Einzelheiten und Vorteile der Erfindung werden anhand des folgenden Ausführungsbeispiels beschrieben. Es zeigen:
- Figur 1: zwei Kennlinienbeispiele von PTC-Heizelementen,
- Figur 2: ein Schaltungsbeispiel.

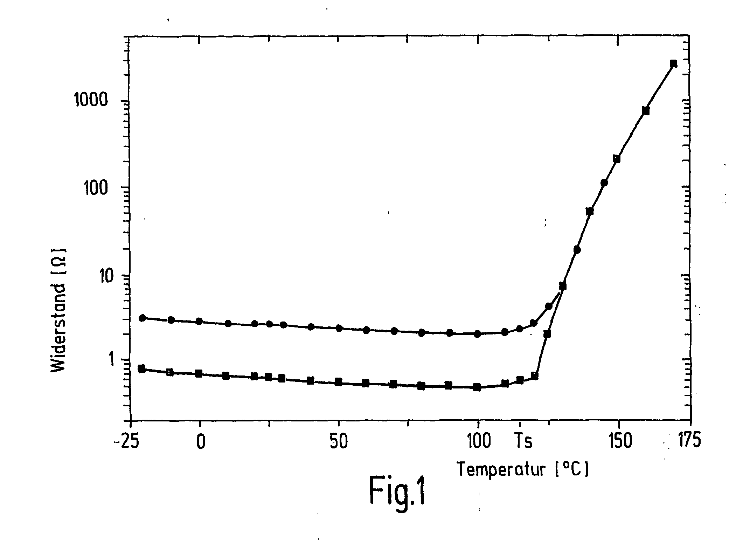

Figur 1 zeigt zwei Kennlinienbeispiele von PTC-Heizelementen. Diese Kennlinien zeigen bei tiefen Temperaturen einen weitgehend flachen Verlauf. Oberhalb einer Sprungtemperatur Tₛ kommt es zu einem starken Anstieg des Widerstandes, welcher eine intrinsische Leistungsbegrenzung der PTC-Heizelemente bewirkt. Bei einer vorgegebenen Versorgungsspannung eines PTC-Heizelementes ist daher in einem weiten Temperaturbereich jedem durch ein PTC-Heizelement fließenden Strom genau eine Temperatur zugeordnet. Das beschriebene Verfahren stabilisiert eine Temperatur eines PTC-Heizelementes unterhalb dieser intrinsischen Sicherheitstemperatur. Es läßt sich besonders vorteilhaft in der Nähe der Sprungtemperatur Tₛ einsetzen, wo mit zunehmender Temperatur zwar eine meßbare Widerstandserhöhung, jedoch noch keine signifikante Leistungsbegrenzung stattfindet. Für die in Figur 1 gezeigten Kennlinienbeispiele wäre das der Temperaturbereich von ungefähr 100°C bis 125°C. Durch gezieltes Dotieren der PTC-Halbleiterkeramik läßt sich dieser Bereich jedoch in weiten Grenzen verschieben und an die Einsatzbedingungen, beispielsweise bei Kfz-Zusatzheizungen, anpassen. Besonders vorteilhaft ist es einen PTC-Halbleiter zu verwenden, bei dem dieser Temperaturbereich unterhalb der Schmelztemperatur von in der Nähe des Heizelementes verwendeten thermoplastischen Kunststoffen und die intrinsische Sicherheitstemperatur unterhalb der Entzündungstemperatur dieser Kunststoffe liegt.

Wie man an den in Figur 1 gezeigten Kennlinienbeispielen von PTC-Heizelementen siegt, steigt der elektrische Widerstand in einem weiten Bereich um die Sprungtemperatur Tₛ mit zunehmender Temperatur monoton an. Aus diesem Grund ist bei PTC-Heizelementen bei vorgegebener Spannung der Versorgungsstrom eine Funktion der Temperatur. Das beschriebene Verfahren stabilisiert die Temperatur einer mit einem PTC-Heizelement arbeitendenen elektrischen Heizung durch Regeln des durch das PTC-Heizelement fließenden Stromes auf einen Sollwert, welcher bei dem gewählten PTC-Heizelement durch die gewählte Solltemperatur und die gewählte Nennspannung bestimmt ist, indem die am PTC-Heizelement im zeitlichen Mittel anliegende Spannung gesteuert wird. Vorteilhaft steht so bis zum Erreichen der Solltemperatur stets die volle Heizleistung zur Verfügung und es kann auf externe Temperaturfühler oder Bimetallschalter verzichtet werden.

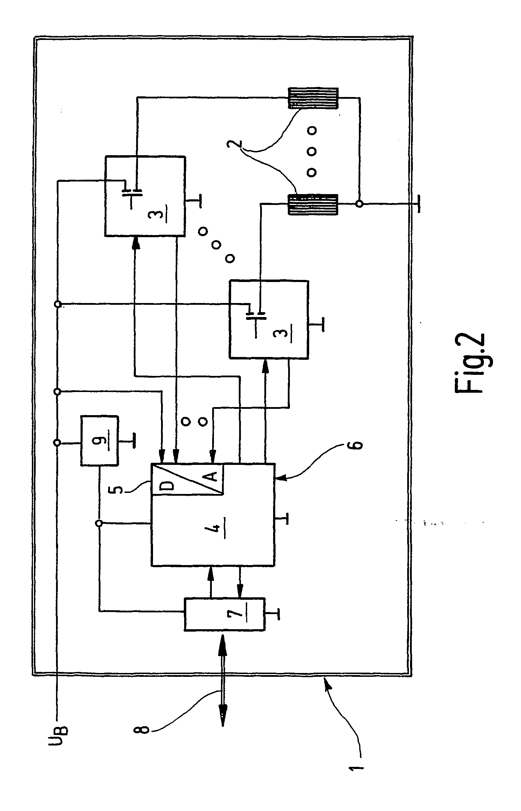

Das in Figur 2 gezeigte Schaltungsbeispiel weist mehrere parallel geschaltete (1 - n) PTC-Heizelemente 2 auf, wobei n = 4 eine für Kfz-Zusatzheizer bevorzugte Zahl ist. Die PTC-Heizelemente 2 werden mit der Versorgungsspannung U_{B} gespeist. Jedes dieser PTC-Heizelemente 2 ist mit einem MOSFET 3, beispielsweise einem VN 610 von ST Microelectronics, in Reihe geschaltet. Mittels eines solchen MOSFETs 3 wird der durch ein PTC-Heizelement 2 fließende Strom gemessen. Der MOSFET 3 stellt an einem seiner Ausgänge ein Signal zur Verfügung, welches ein Maß für diesen Strom ist. Der Mikrocontroller 4 beispielsweise einem ST 72511 von ST Microelectronics erfaßt über seinen integrierten Analog-Digitalwandler 5 neben diesem Signal des MOSFETs 3 auch die Versorgungsspannung U_{B} der PTC-Heizelemente 2. Die Regeleinrichtung 6 ermittelt so mittels ihres Mikrocontrollers 4 zunächst die Versorgungsspannung der PTC-Heizelemente 2 und den durch diese fließenden Strom. In einem weiteren Schritt vergleicht der Mikrocontroller 4 den elektrischen Strom von jedem der PTC-Heizelemente 2 mit dem durch Solltemperatur und Versorgungsspannung festgelegten Sollwert des elektrischen Stromes. Überschreitet der elektrische Strom eines der PTC-Heizelemente 2 den entsprechenden Sollwert, so schaltet der Mikrocontroller 4 mittels des MOSFETs 3 den Strom des entsprechenden PTC-Heizelementes 2 ab. Die vorteilhaft kurzen Schaltzeiten eines MOSFETs 3 erlauben es, den Versorgungsstrom kurzzeitig für eine erneute Temperaturmessung - d.h. Strommessung - wieder einzuschalten ohne, daß es in dieser kurzen Schaltzeit zu einer unerwünschten Erwärmung kommt. Auf das Erfassen der Versorgungsspannung könnte auch verzichtet werden, da diese nur geringen Schwankungen unterworfen ist. Das Erfassen der Versorgungsspannung ermöglicht es jedoch den Stromsollwert an Änderungen der Versorgungsspannung anzupassen.

Im Mikrocontroller 4 ist auch die Kennlinie, welche den Zusammenhang zwischen Temperatur und Versorgungsstrom angibt gespeichert, wodurch sich vorteilhaft zu jeder Zeit die Temperatur jedes PTC-Heizelementes 2 ermitteln und der Regelvorgang optimieren läßt. Der Mikrocontroller 4 steht über eine Schnittstelle 7 mit einem Datenbus 8 in Verbindung. Dieser Datenbus ist einem zentralen Mikroprozessor (nicht gezeigt) verbunden, was vorteilhaft eine Optimierung der Auslastung der Spannungsquelle (nicht gezeigt) unter Berücksichtigung anderer (nicht gezeigter) Stromverbraucher erlaubt. Die Versorgungsspannung U_{B} wird mittels des Spannungsreglers 9, beispielsweise einem L 4949 von ST Microelectronics, auf die vom Mikrocontroller 4 benötigte Versorgungsspannung geregelt.

## Patentansprüche

1. Verfahren zum Stabilisieren der Temperatur einer mit einem PTC-Heizelement (2) arbeitenden elektrischen Kfz-Zusatzheizung auf einen Sollwert, der unterhalb jener Temperatur liegt, bei welcher sich das PTC-Heizelement (2) bei einer vorgegebenen Nennspannung einer Spannungsquelle von selbst stabilisieren würde, durch Regeln des Stromes durch Bestimmen der Stärke des momentan durch das PTC-Heizelement (2) fließenden Stromes als Istwert, Vergleichen des Istwertes mit einem Sollwert der Stromstärke, welcher bei dem gewählten PTC-Heizelement (2) durch die gewählte Solltemperatur bestimmt ist, Steuern der am PTC-Heizelement (2) im zeitlichen Mittel anliegenden Spannung als Sollgröße in Abhängigkeit von der Abweichung des Istwertes vom Sollwert der Stormstärke, wobei der Strom gemessen wird, indem man ihn durch einen MOSFET (3) fließen läßt, welcher an einem seiner Ausgänge ein Signal zur Verfügung stellt, welches ein Maß für diesen Strom ist.

2. Verfahren nach Anspruch 1, **dadurch gekennzeichnet, daß** die Temperatur, bei welcher die Heizung stabilisiert wird, so gewählt wird, daß sie in der Nähe der Sprungtemperatur des PTC-Heizelementes (2) liegt.

3. Verfahren nach einem der vorstehenden Ansprüche, **dadurch gekennzeichnet, daß** die Leistungsabgabe des PTC-Heizelementes (2) durch Pulsweitenmodulation geregelt wird.

4. Verfahren nach einem der vorstehenden Ansprüche, **dadurch gekennzeichnet, daß** zum Steuern der im zeitlichen Mittel am PTC-Heizelement (2) anliegenden Spannung der Strom mittels des MOSFETs (3) geschaltet wird.

5. Verfahren nach einem der vorstehenden Ansprüche, **dadurch gekennzeichnet, daß** das vom MOSFET gelieferte Signal einem Mikrocontroller (4) zugeführt wird, welcher es auswertet und ein Stellsignal erzeugt, welches einem Steuereingang des MOSFET zugeführt wird.

6. Verfahren nach einem der vorstehenden Ansprüche, **dadurch gekennzeichnet, daß** die Versorgungsspannung des PTC-Heizelementes (2) mittels eines Analog-Digitalwandlers (5) des Mikrocontrollers (4) gemessen wird.

7. Verfahren nach einem der vorstehenden Ansprüche, **dadurch gekennzeichnet, daß** die Kennlinie, welche den Zusammenhang zwischen Temperatur und Versorgungsstrom bei der vorgegebenen Spannung angibt, im Mikrocontroller (4) gespeichert wird.

8. Verfahren nach einem der vorstehenden Ansprüche, **dadurch gekennzeichnet, daß** die Heizung mehrere parallel geschaltete PTC-Heizelemente (2) hat und diese alle durch denselben Mikrocontroller (4) geregelt werden.

9. Schaltung zum Stabilisieren der Temperatur einer Kfz-Zusatzheizung, welche ein PTC-Heizelement (2) und ein Strommeßgerät (3) zum Messen des durch das PTC-Heizelement (2) fließenden Stromes sowie eine Regeleinrichtung (6) hat, welche den elektrischen Strom durch Steuern der am PTC-Heizelement (2) im zeitlichen Mittel anliegenden Spannung auf einen festgelegten Sollwert regelt, wobei das Strommeßgerät ein MOSFET (3) ist.

10. Schaltung nach Anspruch 9, **dadurch gekennzeichnet, daß** die Regeleinrichtung einen Mikrocontroller (4) aufweist, der den elektrischen Strom mit seinem Sollwert vergleicht und ein Signal zum Steuern der im zeitlichen Mittel am PTC-Heizelement (2) anliegenden Spannung erzeugt.

11. Schaltung nach Anspruch 9, **dadurch gekennzeichnet, daß** der MOSFET (3) ein Schalter ist, welcher zum Steuern der im zeitlichen Mittel am PTC-Heizelement (2) anliegenden Spannung den Strom schaltet.

12. Schaltung nach einem der Ansprüche 9 bis 11, **dadurch gekennzeichnet, daß** der Mikrocontroller (4) über eine Schnittstelle (7) mit einem Datenbus (8) verbunden ist, welcher mit einem zentralen Mikroprozessor und / oder weiteren Stromverbrauchern verbunden ist.

13. verfahren nach einem der Ansprüche 1 bis 8 zum Stabilisieren der Temperatur einer elektrischen Kfz-Zusatzheizung, welche ein Bauteil aufweist, in welchem ein thermoplastischer Kunststoff verarbeitet ist, welcher eine Schmelztemperatur und eine Entzündungstemperatur hat, auf einen Sollwert der Temperatur, der unterhalb jener Temperatur liegt, bei welcher sich das PTC-Heizelement (2) bei der Nennspannung der Zusatzheizung selbst stabilisieren würde, **dadurch gekennzeichnet, daß** der Sollwert der Temperatur so auf das PTC-Material des PTC-Heizelementes (2) und auf dem verwendeten thermoplastischen Kunststoff abgestimmt wird, daß der Sollwert der Temperatur unterhalb der Schmelztemperatur des thermoplastischen Kunststoffes liegt,
und daß die Temperatur, auf welche sich das PTC-Heizelement (2) aufgrund seiner PTC-Eigenschaft bei der Nennspannung, mit welcher die Kfz-Zusatzheizung betrieben wird, von selbst stabilisiert, unterhalb der Entzündungstemperatur des Kunststoffes liegt.

## Claims

1. A method for stabilizing the temperature of a motor vehicle auxiliary electric heater, that operates with a PTC heating element (2), at a nominal value below the temperature at which the PTC heating element (2) would stabilize automatically at a predefined nominal voltage of a voltage source, by controlling the current via a process where the intensity of the current flowing momentarily through the PTC heating element (2) is determined as an actual value, comparing the actual value with a nominal value of the current intensity, defined for the selected PTC heating element (2) by the selected nominal temperature, controlling the voltage applied in time average to the PTC heating element (2) as a nominal value in response to the deviation of the actual value from the nominal value of the current intensity, the current being measured by causing it to flow through a MOSFET (3) which provides on one of its outputs a signal representative of that current.

2. The method as defined in Claim 1, **characterized in that** the temperature at which the heater is stabilized is selected to be near the critical temperature of the PTC heating element (2).

3. The method as defined in any of the preceding claims, **characterized in that** the power output of the PTC heating element (2) is controlled by pulse-width modulation.

4. The method as defined in any of the preceding claims, **characterized in that** for controlling the voltage applied in time average to the PTC heating element (2) the current is switched by the MOSFET (3).

5. The method as defined in any of the preceding claims, **characterized in that** the signal supplied by the MOSFET is directed to a microcontroller (4) by which it is evaluated to produce an actuating signal which is supplied to a control input of the MOSFET.

6. The method as defined in any of the preceding claims, **characterized in that** the supply voltage of the PTC heating element (2) is measured using an analog-to-digital converter (5) of the microcontroller (4).

7. The method as defined in any of the preceding claims, **characterized in that** the characteristic representative of the interrelation between temperature and current supplied at the predefined voltage is stored in the microcontroller (4).

8. The method as defined in any of the preceding claims, **characterized in that** the heater comprises a plurality of PTC heating elements (2) connected in parallel and that all of them are controlled by the same microcontroller (4).

9. A circuit arrangement for stabilizing the temperature of a motor vehicle auxiliary heater, which comprises a PTC heating element (2) and a current measuring device (3) for measuring the current that flows through the PTC heating element (2) as well as a control system (6) that controls the electric current by controlling the voltage, which is applied in time average to the PTC heating element (2), to a defined nominal value, wherein the current measuring device is a MOSFET (3).

10. The circuit arrangement as defined in Claim 9, **characterized in that** the control system comprises a microcontroller (4) that compares the electric current with its nominal value and produces a signal for controlling the voltage supplied to the PTC heating element (2) in time average.

11. The method as defined in Claim 9, **characterized in that** the MOSFET (3) is a switch that controls the voltage applied in time average to the PTC heating element (2) by switching the current.

12. The method as defined in any one of Claims 9 to 11, **characterized in that** the microcontroller 4 is connected, via an interface 7, with a data bus 8 that is connected with a central microprocessor and/or other current consumers.

13. The method as defined in any of Claims 1 to 8 for stabilizing the temperature of a motor vehicle electric auxiliary heater, comprising a component that contains a thermoplastic material having a melting temperature and an ignition temperature, at a nominal temperature value below that temperature at which the PTC heating element (2) would stabilize automatically at the nominal voltage of the auxiliary heater, **characterized in that** the nominal value of the temperature is so adjusted to the PTC material of the PTC heating element (2) and to the thermoplastic material used that the nominal value of the temperature comes to lie below the melting temperature of the thermoplastic material,
and that due to the PTC properties of the PTC heating element (2) the temperature at which it would stabilize automatically at the nominal voltage at which the vehicle auxiliary heater is operated comes to lie below the ignition temperature of the plastic material.

## Revendications

1. Procédé pour la stabilisation de la température d'une résistance électrique additionnelle pour véhicule automobile, travaillant avec un élément de chauffage à coefficient de température positif (2), à une valeur de consigne qui est inférieure à la température à laquelle l'élément de chauffage à coefficient de température positif (2), à une tension nominale prédéfinie d'une source de tension, se stabiliserait de lui-même, par le réglage du courant via la détermination de l'intensité du courant circulant à ce moment à travers l'élément de chauffage à coefficient de température positif (2) comme étant la valeur réelle, comparaison de la valeur réelle à une valeur de consigne de l'intensité du courant, qui est déterminée par la température de consigne sélectionnée dans l'élément de chauffage sélectionné à coefficient de température positif (2), par la commande, à titre de valeur de consigne, de la tension appliquée dans la moyenne temporelle à l'élément de chauffage à coefficient de température positif (2), en fonction de l'écart entre la valeur réelle et la valeur de consigne de l'intensité du courant, le courant étant mesuré en le faisant circuler à travers un MOSFET (3) qui fournit, à une de ses extrémités, un signal qui représente une mesure pour ce courant.

2. Procédé selon la revendication 1, **caractérisé en ce que** la température, à laquelle le chauffage est stabilisé, est sélectionnée de telle sorte qu'elle se situe à proximité de la température de déclic de l'élément de chauffage à coefficient de température positif (2).

3. Procédé selon l'une quelconque des revendications précédentes, **caractérisé en ce que** la puissance utile de l'élément de chauffage à coefficient de température positif (2) est réglée via une modulation d'impulsions en durée.

4. Procédé selon l'une quelconque des revendications précédentes, **caractérisé en ce que**, pour la commande de la tension appliquée dans la moyenne temporelle à l'élément de chauffage à coefficient de température positif (2), le courant est mis en circuit au moyen du MOSFET (3).

5. Procédé selon l'une quelconque des revendications précédentes, **caractérisé en ce que** le signal fourni par le MOSFET est acheminé à un microcontrôleur (4) qui l'évalue et génère un signal de réglage qui est acheminé à une entrée de commande du MOSFET.

6. Procédé selon l'une quelconque des revendications précédentes, **caractérisé en ce que** la tension d'alimentation de l'élément de chauffage à coefficient de température positif (2) est mesurée au moyen d'un convertisseur analogique-numérique (5) du microcontrôleur (4).

7. Procédé selon l'une quelconque des revendications précédentes, **caractérisé en ce que** la caractéristique qui indique le rapport entre la température et le courant d'alimentation à la tension prédéfinie, est mémorisée dans le microcontrôleur (4).

8. Procédé selon l'une quelconque des revendications précédentes, **caractérisé en ce que** le chauffage possède plusieurs éléments de chauffage à coefficient de température positif (2) montés en parallèle, tous ces éléments étant réglés par le même microcontrôleur (4).

9. Circuit pour la stabilisation de la température d'une résistance additionnelle pour véhicule automobile, qui possède un élément de chauffage à coefficient de température positif (2) et un appareil de mesure du courant (3) pour la mesure du courant circulant à travers l'élément de chauffage à coefficient de température positif (2), ainsi qu'un mécanisme de réglage (6) qui règle le courant électrique à une valeur de consigne déterminée via une commande de la tension s'appliquant, dans la moyenne temporelle, à l'élément de chauffage à coefficient de température positif (2), l'appareil de mesure du courant étant un MOSFET (3).

10. Circuit selon la revendication 9, **caractérisé en ce que** le mécanisme de réglage présente un microcontrôleur (4) qui compare le courant électrique à sa valeur de consigne et génère un signal pour la commande de la tension s'appliquant dans la moyenne temporelle à l'élément de chauffage à coefficient de température positif (2).

11. Circuit selon la revendication 9, **caractérisé en ce que** le MOSFET (3) est un interrupteur qui met le courant en circuit pour la commande de la tension s'appliquant dans la moyenne temporelle à l'élément de chauffage à coefficient de température positif (2).

12. Circuit selon l'une quelconque des revendications 9 à 11, **caractérisé en ce que** le microcontrôleur (4) est relié via une interface (7) à un bus de données (8) qui est relié à un microprocesseur central et/ou à d'autres consommateurs de courant.

13. Procédé selon l'une quelconque des revendications 1 à 8, pour la stabilisation de la température d'une résistance électrique additionnelle pour véhicule automobile, qui présente un composant dans lequel a été traitée une matière synthétique thermoplastique qui possède une température de fusion et une température d'inflammation, à une valeur de consigne de la température, qui est inférieure à la température à laquelle l'élément de chauffage à coefficient de température positif (2) se stabiliserait de lui-même à la tension nominale de la résistance additionnelle, **caractérisé en ce que** la valeur de consigne de la température est déterminée en fonction du matériau à coefficient de température positif de l'élément de chauffage (2) du même type et en fonction de la matière synthétique thermoplastique utilisée, **en ce que** la valeur de consigne de la température est inférieure à la température de fusion de la matière synthétique thermoplastique et **en ce que** la température, à laquelle l'élément de chauffage à coefficient de température positif (2) se stabilise de lui-même sur base de sa propriété de coefficient de température positif à la tension nominale avec laquelle la résistance additionnelle du véhicule automobile est entraînée, est inférieure à la température d'inflammation de la matière synthétique.
